# EUROPÄISCHE PATENTSCHRIFT

(11) **EP 2 761 399 B1**
(45) Veröffentlichungstag und Bekanntmachung des Hinweises auf die Patenterteilung: **01.08.2018**
(21) Anmeldenummer: 12772201.5
(22) Anmeldetag: 04.09.2012
(51) Int. Cl.: G06F 3/042, G06F 3/01

(54) **DATENHANDSCHUH MIT TAKTILER RÜCKINFORMATION UND VERFAHREN**
DATAGLOVE HAVING TACTILE FEEDBACK AND METHOD
GANT DE DONNÉES À RÉTRO-INFORMATION TACTILE ET PROCÉDÉ

(30) Priorität: 29.09.2011 DE 102011114535
(43) Veröffentlichungstag der Anmeldung: 06.08.2014
(73) Patentinhaber: Airbus Defence and Space GmbH, 85521 Ottobrunn (DE)
(72) Erfinder: MÖLLER, Christoph, 07318 Saalfeld (DE); OPITZ, Marco, 85296 Rohrbach (DE); Rabl, Alexander, 93047 Regensburg (DE); KORNAU, Nils, 48431 Rheine (DE)
(74) Vertreter: LKGLOBAL Lorenz & Kopf PartG mbB Patentanwälte
(86) Internationale Anmeldenummer: PCT/DE2012/000881
(87) Internationale Veröffentlichungsnummer: WO 2013/044893

(56) Entgegenhaltungen:
- WO-A1-2010/032223
- US-A1- 2006 007 124

## Beschreibung

Die Erfindung betrifft einen Datenhandschuh mit taktiler Rückinformation an einem Finger bei Interaktion dieses Fingers mit einem Interaktionselement auf einem Infrarot-Touchscreen, gemäß den Merkmalen des Patentanspruchs 1. Die Erfindung betrifft ferner ein Verfahren zur Generierung einer taktilen Rückinformation an einem Finger eines Datenhandschuhs, bei Interaktion dieses Fingers mit einem Interaktionselement auf einem Touchscreen gemäß den Merkmalen des Patentanspruchs 4. In der weiteren Beschreibung wird unter einem Touchscreen allgemein eine berührungssensitive Oberfläche verstanden.

Touchscreens sind weitgehend bekannt und haben in vielen Bereichen Einzug in das tägliche Leben genommen, z.B. Bedienung von Geldautomaten. Grundsätzlich unterscheidet man zwei verschiedene Techniken von Touchscreens: die resistiven Touchscreens und die kapazitiven Touchscreens. Hinzu kommen darauf basierende Technologien wie Near Field Imaging, Acoustic Wave oder Infrarot Touchscreen.

Ein Touchscreen, Tastschirm, Berührungsbildschirm bzw. Sensorbildschirm ist ein kombiniertes Ein- und Ausgabegerät, bei dem durch Berührung von Teilen eines Bildes der Programmablauf eines technischen Gerätes, meist eines Computers, direkt gesteuert werden kann. Die technische Umsetzung der Befehlseingabe ist für den Nutzer gleichsam unsichtbar und erzeugt so den Eindruck einer unmittelbaren Steuerung eines Computers per Fingerzeig.

Touchscreens zeichnen sich durch eine einfache und flexible Bedienung aus. Durch sie ist es möglich, mit grafischen Objekten, die auf dem Display dargeboten werden, direkt zu interagieren. Dies wird durch berührsensitive aktive Flächen realisiert, die um grafische Objekte angeordnet sind. Die grafischen Objekte dienen dabei der visuellen Identifikation des Interaktionselementes. Die den aktiven Flächen zu Grunde liegende Bedienlogik orientiert sich in der Regel an dem Verhalten physikalisch realer Bedienapparate, wie beispielsweise Schalter oder Stellregler. Es lassen sich auf diese Art Charakteristiken nahezu beliebiger Eingabegeräte simulieren.

Dennoch erfolgt die Bedienung über Touchscreens oftmals nicht so effizient wie mit physikalisch realen Bedienapparaten, beispielsweise einer Tastatur. Eine Begründung hierfür ist in der fehlenden taktilen Rückinformation des Touchscreens zu finden. Dieser Effekt kommt zweifach zum Tragen, da die taktile Rückinformation bei Eingabeaktionen über physikalisch reale Eingabeapparate zum einen bei der Identifikation des korrekten Eingabegerätes hilft, und zum anderen Rückmeldung über den Erfolg bei der Ausführung der Bedienaktion gibt. Während bei einer physikalisch realen Tastatur die Identifikation neben der üblichen visuellen Identifikation über das Auge auch durch das Erfühlen von Kanten, Flächen und Zwischenräumen durch den Tastsinn der Fingerkuppen erfolgen kann, ist letzteres bei einer virtuellen Tastatur nicht möglich. Der visuelle Sinneskanal wird bei der Eingabe durch eine virtuelle Tastatur also verstärkt beansprucht, wodurch nur reduzierte visuelle Kapazitäten für weitere Tätigkeiten zur Verfügung stehen. Des Weiteren kann es zu Leistungseinschränkungen des Operateurs kommen, wenn diese eine taktile Rückinformation erwartet aber nicht bekommt.

Auch bei der Durchführung der eigentlichen Bedienaktion bietet die virtuelle Tastatur keine taktile Rückinformation. Der Operateur erhält über die Rezeptoren der Fingerkuppen zwar Rückmeldung, ob der Bildschirm berührt wurde. Diese Rückmeldung steht jedoch in keinen zwingenden Zusammenhang mit dem Erfolg der Bedienaktion. Die Rückmeldung hierzu muss wieder visuell erzeugt werden. Bei einer physikalisch realen Tastatur hingegen muss der Operateur bei der Eingabehandlung zunächst den Druckpunkt der Feder überwinden und anschließend eine translatorische Stellbewegung ausführen. Er bekommt Rückmeldung über den Erfolg seiner Bedienaktion durch den Tastenanschlagpunkt, der die translatorische Stellbewegung limitiert.

Das heißt, eine physikalisch reale Tastatur bietet sowohl vor als auch nach einer Eingabehandlung dem Operateur eine taktile Rückinformation, wodurch dessen visueller Sinneskanal entlastet wird. Die Eingabehandlung kann somit effizienter als mit einer virtuellen Tastatur erfolgen.

Es ist bekannt, dass bei einem Touchscreen die Fingerposition auf dem Touchscreen detektiert werden kann. Wird also eine Eingabehandlung auf dem Bildschirm durch den Operateur getätigt, detektiert zunächst der Infrarot-Touchrahmen die relative Position eines den Touchscreen berührenden oder sich in unmittelbarer Nähe über dem Touchscreen befindlichen Fingers auf dem Bildschirm. Fällt diese Position auf die eines Interaktionselements, wird die beabsichtigte Bedienfunktionalität durchgeführt.

Aus der DE 10 2005 011432 A1 ist ein Virtual-Reality-System bekannt, bei welchem einzelne Finger eines Datenhandschuhs mittels eines Kamerasystems identifiziert werden können. Aus DE 20 2005 019 953 U1 ist ein Datenhandschuh mit Rückinformation bekannt.

WO 2010/032223 A1 beschreibt eine Mensch-Maschine-Schnittstelle in Form eines ringförmigen Aufsatzes für einen einzelnen Finger, wobei mehrere Aufsätze für verschiedene Finger vorgesehen sein können. Verschiedene Finger werden dadurch identifiziert, dass jeder Ring unterschiedliches Licht ausstrahlt. Das ausgestrahlte Licht wird von dem Touchscreen oder von dem Ring detektiert. Der Abstand des Ringes von Touchscreen kann durch die Intensität des Lichtes detektiert werden. Der Aufsatz gibt eine taktile Rückmeldung an einen Finger des Nutzers und kann auch Geräusche ausgeben. Die Fingeraufsätze werden als Eingabegeräte verwendet, können aber auch Informationen an einen Benutzer ausgeben.

US 2006/0007124 A1 beschreibt ein System zum Erkennen von Objekten, welche in der Nähe eines Displays angeordnet sind. Optische Marker können an den Fingern eines Benutzers angeordnet sein, um die Erkennung eines Fingers zu ermöglichen. Ein Nutzer trägt erkennbare Elemente an den Fingern und wo auch immer die Oberfläche der Anzeigeeinheit berührt wird, wird diejenige Aktion ausgeführt, welche dem berührenden Element zugeordnet ist. Die Erfindung wird durch den Gegenstand der unabhängigen Ansprüche 1 und 4 definiert. Vorteilhafte Ausgestaltungen der Erfindung sind Gegenstand von Unteransprüchen.

Die taktile Rückmeldung wird an dem Finger, welcher als der mit dem Touchscreen interagierende identifiziert wird (selektive Rückinformation), zweckmäßig durch einen Reizgeber zur Erzeugung eines Vibrationsreizes, eines mechanischen, elektrischen oder thermischen Reizes generiert. Der Vibrationsreiz wird aufgrund des schnellen Ansprechverhaltens des Reizgebers und der guten Wahrnehmbarkeit und des Wohlbefindens des Operateurs gegenüber anderen Reizformen (Druckreize, thermisch Reize, elektrische Reize) präferiert.

Die Identifikation des interagierenden Fingers kann z.B. mittels mehrerer Kameras entsprechend der Lehre aus DE 10 2005 011 432 A1 erfolgen.

In der Erfindung ist der Touchscreen ein Infrarot-Touchscreen. In diesem Fall wird die Infrarot-Technologie verwendet, um den auf dem Infrarot-Touchscreen interagierenden Finger zu detektieren. Zweckmäßig sind im Bereich der Fingerspitzen des Datenhandschuhs Infrarot-Fotodetektoren, z.B. Infrarot-Fototransistoren oder Infrarot-Fotodioden, angebracht, welche die von einem Infrarot-Touchscreen ausgesendeten Infrarotstrahlen detektieren können.

Die Fotoströme der zur Detektion verwendeten Infrarot- Fotodetektoren werden ausgewertet und der Infrarot-Fotodetektor mit dem maximalen Fotostrom ermittelt. Die Auswertung erfolgt zweckmäßig mittels eines Mikrocontrollers, z.B. mittels eines integrierten Komparators. Da das Infrarot Gitternetz des Infrarot-Touchscreens mit zunehmender Entfernung von Display schwächer wird, befindet sich der Infrarot-Fotodetektor mit dem maximalen Fotostrom im Vergleich zu den anderen Infrarot-Fotodetektoren näher an der Bildschirmfläche des Touchscreens. Da jedem Fingeraufnahmeelement des Datenhandschuhs, zweckmäßig im Bereich der Fingerspitze, eine Infrarot-Fotodetektor zugeordnet ist, kann somit der mit dem Touchscreen interagierende Finger bestimmt werden.

Bei erfolgreicher Betätigung eines Interaktionselements auf dem Infrarot-Touchscreen sendet der Infrarot-Touchscreen ein elektrisches Signal an den Datenhandschuh. Wobei die Verbindung zwischen dem Infrarot-Touchscreen und dem Datenhandschuh mittels bekannter Schnittstellen, z.B. serielle Schnittstelle hergestellt ist.

In einer besonderen Ausführungsform der Erfindung triggert die Übermittlung des elektrischen Signals an den Datenhandschuh die Identifizierung des mit dem Infrarot-Touchscreen interagierenden Fingers. Mit anderen Worten, erst dann, wenn der Infrarot-Touchscreen ein erfolgreicher Betätigung eines Interaktionselements registriert und damit ein entsprechendes Triggersignal an den Datenhandschuh sendet, wird im Datenhandschuh die Identifizierung desjenigen Fingers initiiert, welcher mit dem Infrarot-Touchscreen interagiert und damit die erfolgreiche Betätigung des Interaktionselements ausgelöst hat.

Das Triggersignal kann ein spezifisches elektrisches Signal sein, in dem weitere Informationen enthalten sind. Zum Beispiel, ob es sich bei der erfolgreichen Betätigung des Interaktionselements um eine bestimmte Bedienfunktionalität wie ein "Lift-Off" Event (=der interagierende Finger verlässt die aktive Bildschirmfläche) oder ein "Touch" Event (=der interagierende Finger berührt zur Identifikation von Bedienelementen auf dem Touchscreen eine aktive Bildschirmfläche des Touchscreens) handeln. Ein weiteres Beispiele wäre ein "Drag" Event (=der interagierende Finger bewegt sich von außerhalb in eine aktive Bildschirmfläche des Touchscreens).

Wurde eine erfolgreiche Betätigung eines Interaktionselements auf dem Infrarot-Touchscreen registriert und an den Datenhandschuh übermittelt und wurde der entsprechende interagierende Finger identifiziert, wird ein Signal an den Reizgeber des entsprechenden Fingers zur Erzeugung eines taktilen Reizes gesendet. Hierbei ist es möglich, dass das an den Reizgeber gesendete Signal ein spezifisches Signal ist, welches von dem den Datenhandschuh entsprechend der Bedienfunktionalität gesendeten Triggersignal abhängt. Somit ist es möglich, je nach Bedienfunktionalität eine entsprechende Rückmeldung an den interagierenden Finger zu übermitteln, welches z.B. in Vibrationsdauer, Vibrationsfrequenz (Stärke) und Amplitudenverlauf variiert.

Die Displayqualität des Infrarot-Touchscreens wird durch die verwendete Sensorik in keinster Weise negativ beeinflusst, der Transmissionsgrad wird nicht reduziert. Durch die Entkopplung des Rückinformation erzeugenden Gerätes (Reizgeber auf dem Datenhandschuh) vom Touchscreen, kommt es auf dem Touchscreen zu keinen schwingungsinduzierten Verschwimmungseffekten.

Die Erfindung wird anhand von Figuren näher erläutert. Es zeigen:
- Fig. 1: eine Prinzipskizze eines erfindungsgemäße Datenhandschuhs

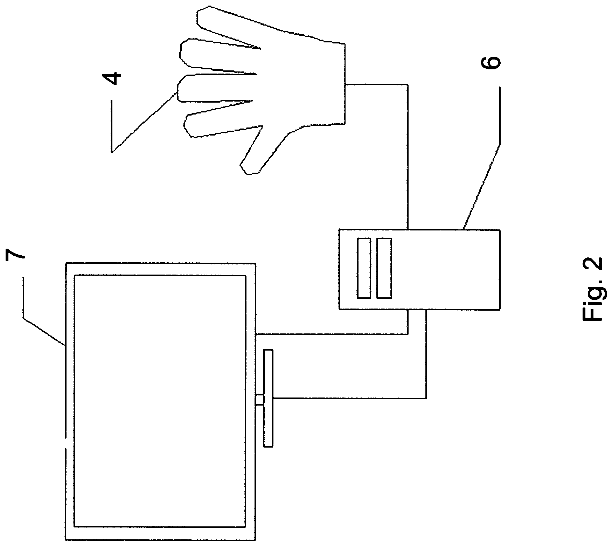

- Fig. 2: eine Prinzipskizze eines Datenhandschuhs im Zusammenspiel mit einem Infrarot-Touchscreen.

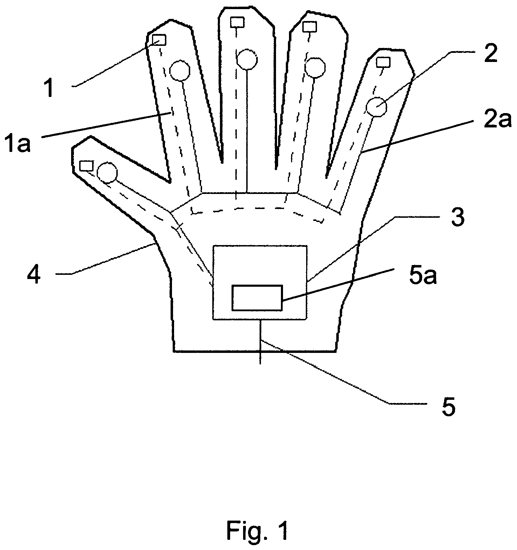

Fig. 1 zeigt eine Prinzipskizze eines erfindungsgemäßen Datenhandschuhs. Die Reizgeber 2, z.B. reizerzeugende Elektromotoren und die signalverarbeitende Logikeinheit 3, z.B. ein Mikrocontroller, welcher z.B. ein Operationsverstärker sein kann, sind an den Fingeraufnahmeelementen des Datenhandschuhs 4 angeordnet. Um Bedienhandlungen des Operateurs (nicht dargestellt) mit dem Touchscreen 7 und anderen, physikalisch real existierenden Bedienelementen nicht einzuschränken, können alle Bauteile zweckmäßig auf der Handrückseite des Handschuhs 4 angeordnet werden. Die sensitive Fingerunterseite, die dem Operateur auch zum Erfühlen anderer Interaktionselemente dient, wird dadurch komplett freigehalten.

Zweckmäßig werden die Reizgeber 2 in Höhe der Fingermittelknochen an den Fingeraufnahmeelementen des Datenhandschuhs 4 angebracht und sind durch Kabel 2a mit dem Mikrocontroller 3 verbunden. Bei den Reizgebern 2 kann es sich um handelsübliche Gleichstromelektromotoren handeln, wie sie auch in Handys zu finden sind. Nicht dargestellt ist eine am Datenhandschuh 4 angebrachte Gleichstromquelle für die Gleichstromelektromotoren.

Die Reizgeber 2 werden über einen Signalgenerator 5a angesteuert. Der Signalgenerator 5a ist beispielhaft in den Mikrocontroller 3 integriert. Es ist aber auch möglich, dass der Signalgenerator 5a außerhalb des Mikrocontrollers 3 angeordnet ist.

Die Infrarot-Fotodetektoren 1, z.B. Infrarot-Transistoren sind in Höhe der Fingerspitzen (Fingerkuppen) der Fingeraufnahmeelemente derart angebracht, dass sie bei einer typischen Bedienaktion in Richtung der Fotodioden (Sender) des Infrarot-Touchrahmens 7 ausgerichtet sind. Sie zeichnen sich durch ein robustes Verhalten und geringe Beschaffungskosten aus. Über einfache Kabel 1a sind auch sie mit dem Mikrocontroller 5 verbunden.

Der Mikrocontroller 3 ist über eine konventionelle serielle Schnittstelle 5 zum Empfang von Triggersignalen über einen Computer 6 mit dem Infrarot-Touchscreen 7 verbunden. Die Verbindung kann z.B. auch eine Funk- oder Infrarotverbindung sein.

## Patentansprüche

1. Datenhandschuh (4) zur Generierung einer taktilen Rückinformation an einem Finger bei Interaktion dieses Fingers mit einem Interaktionselement auf einem Infrarot-Touchscreen (7), wobei der Datenhandschuh (4) Aufnahmeelemente zur Aufnahme der Finger eines Operateurs sowie Mittel (2) zur Erzeugung einer taktilen Rückinformation umfasst,
wobei Reizgeber (2) zur Erzeugung einer taktilen Rückinformation an den Fingeraufnahmeelementen angebracht sind, wobei Mittel (1, 3) zur Identifizierung des mit dem Infrarot-Touchscreen (7) interagierenden Fingers vorhanden sind;
wobei ein Signalgenerator (5a) zur Anregung des Reizgebers (2) des interagierenden Fingers bei erfolgreicher Betätigung eines Interaktionselements auf dem Infrarot-Touchscreen (7) vorhanden ist;
wobei an den Aufnahmeelementen im Bereich der Fingerspitze, die vom Infrarot-Touchscreen (7) emittierte Infrarotstrahlung identifizierbare Infrarot-Fotodetektoren (1) angebracht sind; wobei zur Identifizierung des mit dem Infrarot-Touchscreen (7) interagierenden Fingers eine mit den Infrarot-Fotodetektoren (1) verbundene signalverarbeitende Logik (3) zum Vergleichen der in den Infrarot-Fotodetektoren (1) erzeugten Fotoströme vorhanden ist und die signalverarbeitende Logik (3) ausgeführt ist, den Infrarot-Fotodetektor mit einem maximalen Fotostrom zu ermitteln und diesen ermittelten Infrarot-Fotodetektor dem interagierenden Finger zuzuordnen, so dass der interagierende Finger identifiziert werden kann, wobei der interagierende Finger der Bildschirmfläche des Infrarot-Touchscreens (7) näher ist als die anderen Finger des Operateurs; und
wobei die signalverarbeitende Logik (3) über eine Schnittstelle (5) mit dem Infrarot-Touchscreen (7) verbunden ist.

2. Datenhandschuh nach Anspruch 1, wobei der Signalgenerator (5a) mit einem Mikrocontroller (3) verbunden ist oder in die signalverarbeitende Logik (3) integriert ist.

3. Datenhandschuh nach einem der Ansprüche 1 bis 2, wobei der Reizgeber (2) ein Mittel zur Erzeugung eines Vibrationsreizes, eines mechanischen, elektrischen oder thermischen Reizes ist.

4. Verfahren zur Generierung einer taktilen Rückinformation an einem Finger eines Datenhandschuhs (4) bei Interaktion dieses Fingers mit einem Interaktionselement auf einem Infrarot-Touchscreen (7), wobei der interagierende Finger identifiziert wird und bei erfolgreicher Betätigung des Interaktionselementes auf dem Infrarot-Touchscreen (7) ein taktiler Reiz durch einen Signalgenerator (5a) mittels Reizgeber (2) an dem interagierenden Finger erzeugt wird;
wobei zur Bestimmung des mit dem Infrarot-Touchscreen (7) interagierenden Fingers die im Bereich der Fingerspitzen am Datenhandschuh angebrachten Infrarot-Fotodetektoren (1) durch eine signalverarbeitende Logik (3) ausgewertet werden und der Infrarot-Fotodetektor mit dem maximalen Fotostrom ermittelt wird und dieser ermittelte Infrarot-Fotodetektor dem interagierenden Finger zugeordnet wird um den interagierenden Finger zu identifizieren, wobei der interagierende Finger der Bildschirmfläche des Infrarot-Touchscreens (7) näher ist als die anderen Finger eines Operateurs; und
wobei bei erfolgreicher Betätigung des Interaktionselements auf dem Infrarot-Touchscreen (7) ein elektrisches Signal vom Infrarot-Touchscreen (7) an den Datenhandschuh (4) gesendet wird, um an dem interagierenden Finger den zu erzeugenden taktilen Reiz zu generieren.

5. Verfahren nach Anspruch 4, wobei die Übermittlung des elektrischen Signals an den Datenhandschuh (4) die Identifizierung des interagierenden Fingers triggert.

6. Verfahren nach Anspruch 4 oder 5, wobei in Abhängigkeit der Bedienfunktionalität des erfolgreich betätigten Interaktionselements ein spezifisches elektrisches Signal an den Datenhandschuh (4) gesendet wird.

7. Verfahren nach Anspruch 6, wobei entsprechend des an den Datenhandschuh (4) gesendeten spezifischen elektrischen Signals ein weiteres spezifisches Signal an einen Reizgeber zur Erzeugung des taktilen Reizes gesendet wird.

## Claims

1. Data glove (4) for generating a tactile feedback information on a finger when interacting this finger with an interaction element on an infrared touch screen (7), wherein the data glove (4) comprises receiving elements for receiving the fingers of an operator and means (2) for generating a tactile feedback information,
wherein stimulators (2) are attached to the finger receiving elements for generating a tactile feedback information,
wherein means (1, 3) are provided for identifying the finger interacting with the infrared touch screen (7);
wherein a signal generator (5a) is provided for exciting the stimulators (2) of the interacting finger upon successful actuation of an interaction element on the infrared touchscreen (7);
wherein infrared photodetectors (1) are attached in a fingertip region of the receiving elements to identify infrared radiation emitted by the infrared touchscreen (7) and;
wherein a signal processing logic (3) connected to the infrared photodetectors (1) for comparing the photocurrents generated in the infrared photodetectors (1) is present to identify the finger interacting with the infrared touch screen (7) and the signal processing logic (3) is configured to detect the infrared photodetector with a maximum photocurrent and assign this detected infrared photodetector to the interacting finger so that the interacting finger can be identified, wherein the interacting finger is closer to the screen surface of the infrared touchscreen (7) than the other fingers of the operator, and wherein the signal processing logic (3) is connected via an interface (5) to the infrared touch screen (7) .

2. Data glove according to one of the claims 1,
wherein the signal generator (5a) is connected to a microcontroller (3) or integrated into the signal processing logic (3).

3. Data glove according to one of claims 1 to 2,
wherein the stimulator (2) is a means for generating a vibration stimulus, a mechanical, electrical or thermal stimulus.

4. Method for generating a tactile feedback information on a finger of a data glove (4) when this finger interacts with an interaction element on an infrared touch screen (7),
wherein the interacting finger is identified and, upon successful actuation of the interactive element on the infrared touch screen (7), a tactile stimulus is generated by a signal generator (5a) by means of a stimulator (2) on the interacting finger;
wherein for determining the finger interacting with the infrared touch screen (7), the infrared photodetectors attached to the data glove at the region of fingertips are evaluated by a signal processing logic (3) and the infrared photodetector with the maximum photocurrent is detected and this detected infrared photodetector is assigned to the interacting finger to identify the interacting finger, wherein the interacting finger is closer to the screen surface of the infrared touchscreen (7) than the other fingers of the operator; and
wherein, upon successful actuation of the interactive element on the infrared touchscreen (7), an electrical signal is sent from the infrared touchscreen (7) to the data glove (4) to generate the tactile stimulus to be generated at the interacting finger.

5. Method according to claim 4,
wherein the transmission of the electrical signal to the data glove (4) triggers the identification of the interacting finger.

6. Method according to Claim 4 or 5,
wherein a specific electrical signal is sent to the data glove (4) depending on the operating functionality of the successfully actuated interaction element.

7. Method according to claim 6,
Wherein, according to the specific electrical signal sent to the data glove (4), another specific signal is sent to a stimulator to generate the tactile stimulus.

## Revendications

1. Gant de données (4) pour générer une information de retour tactile sur un doigt lorsqu'il interagit avec un élément d'interaction sur un écran tactile infrarouge (7), ledit gant de données comprend des éléments de réception pour recevoir les doigts d'un opérateur et des moyens (2) pour générer une information de retour tactile,
dans lequel des émetteurs de stimulus (2) sont attachés aux éléments de réception de doigt pour générer une information de retour tactile,
dans lequel des moyens (1, 3) sont prévus pour identifier le doigt interagissant avec l'écran tactile infrarouge (7);
dans lequel un générateur de signal (5a) pour exciter l'émetteur de stimulus (2) du doigt interagissant lors de l'actionnement réussi d'un élément d'interaction sur l'écran tactile infrarouge (7) est présent;
dans lequel des photodétecteurs infrarouges identifiables (1) sont montés sur les éléments de réception dans la région du bout du doigt pour identifier le rayonnement infrarouge émis par l'écran tactile infrarouge (7);
dans lequel une logique de traitement de signal (3) connectée aux photodétecteurs infrarouges (1) pour comparer les photocourants générés dans les photodétecteurs infrarouges (1) est présente pour identifier le doigt interagissant avec l'écran tactile infrarouge (7) et la logique de traitement de signal est configuré pour détecter le photodétecteur infrarouge avec un photocourant maximum et affecter ce photodétecteur infrarouge détecté au doigt interagissant de sorte que le doigt interagissant puisse être identifié, dans lequel le doigt interagissant étant plus proche de la surface de l'écran tactile infrarouge (7) que les autres doigts de l'opérateur, et dans lequel la logique de traitement de signal (3) est connectée via une interface (5) à l'écran tactile infrarouge (7).

2. Gant de données selon revendication 1,
dans lequel le générateur de signal (5a) est connecté à un microcontrôleur (3) ou intégré dans la logique de traitement de signal (3).

3. Gant de données selon l'une des revendications 1 à 2,
dans lequel le générateur de stimulus (2) est un moyen pour générer un stimulus de vibration, un stimulus mécanique, électrique ou thermique.

4. Procédé pour générer une information de retour tactile sur un doigt d'un gant de données (4) lorsque ce doigt interagit avec un élément d'interaction sur un écran tactile infrarouge (7),
dans lequel le doigt interagissant est identifié et, après un actionnement réussi de l'élément interactif sur l'écran tactile infrarouge (7), un stimulus tactile est généré par un générateur de signal (5a) au moyen d'un émetteur de stimulus (2) sur le doigt interagissant;
dans lequel pour déterminer le doigt interagissant avec l'écran tactile infrarouge (7), les photodétecteurs infrarouges attachés au gant de données au bout des doigts sont évalués par une logique de traitement de signal (3) et le photodétecteur infrarouge est détecté avec le photocourant maximum et ce photodétecteur infrarouge détecté est affecté au doigt interagissant pour identifier le doigt interagissant, dans lequel le doigt interagissant étant plus proche de la surface de l'écran tactile infrarouge (7) que les autres doigts de l'opérateur; et dans lequel, après un actionnement réussi de l'élément d'interaction sur l'écran tactile infrarouge (7), un signal électrique est envoyé de l'écran tactile infrarouge (7) au gant de données (4) pour générer le stimulus tactile à générer au niveau du doigt interagissant.

5. Procédé selon la revendication 4,
dans lequel la transmission du signal électrique au gant de données (4) déclenche l'identification du doigt interagissant.

6. Procédé selon la revendication 4 ou 5,
dans lequel un signal électrique spécifique est envoyé au gant de données (4) en dépendant de la fonctionnalité d'utilisation de l'élément d'interaction actionné avec réussite.

7. Procédé selon la revendication 6,
dans lequel, en fonction du signal électrique spécifique envoyé au gant de données (4), un autre signal spécifique est envoyé à un générateur de stimulus pour générer le stimulus tactile.
